# EUROPÄISCHE PATENTSCHRIFT

(11) **EP 4 012 227 B1**
(45) Veröffentlichungstag und Bekanntmachung des Hinweises auf die Patenterteilung: **09.08.2023**
(21) Anmeldenummer: 21213025.6
(22) Anmeldetag: 08.12.2021
(51) Int. Cl.: F16H 37/12, F16K 31/52, F16H 21/34, F16H 37/06

(54) **LINEARANTRIEB**
LINEAR DRIVE
ENTRAÎNEMENT LINÉAIRE

(30) Priorität: 09.12.2020 DE 102020132793
(43) Veröffentlichungstag der Anmeldung: 15.06.2022
(73) Patentinhaber: WITTENSTEIN SE, 97999 Igersheim (DE)
(72) Erfinder: Gehrig, Tobias, 74744 Ahorn (DE)
(74) Vertreter: Zimmermann & Partner Patentanwälte mbB

(56) Entgegenhaltungen:
- EP-A2- 1 310 701
- WO-A1-00/66913
- GB-A- 1 200 277
- US-A- 2 390 229
- US-A1- 2018 155 053

## Beschreibung

### Gebiet der Erfindung

Die Erfindung betrifft einen Linearantrieb, insbesondere zur Umsetzung einer Rotationsbewegung in eine Linearbewegung zur Betätigung eines Ventils mit einem Absperrschieber.

### Stand der Technik

Aus dem Stand der Technik sind Linearantriebe beispielsweise zur Verwendung in Absperrvorrichtungen für eine Anwendung im Unterseebereich ("subsea") bekannt. So ist aus der Veröffentlichung der US-Anmeldung US 2019/0301635 A1 eine Untersee-Absperrvorrichtung bekannt, welche die Rotation eines Motors mittels eines Kurbeltriebs in eine Linearbewegung umsetzt, um ein Ventil zu betätigen.

Allerdings besteht teilweise das Bedürfnis, den Linearantrieb kleiner, kompakter oder bei gleicher Baugröße Drehmoment-stärker zu bauen.

Aus der US 2,390,229 ist ein Getriebe mit mehreren Pleuelstangen bekannt.

### Offenbarung der Erfindung

Aufgabe der Erfindung ist es, einen Linearantrieb bereitzustellen, der kompakt aufgebaut ist oder über eine erhöhte Antriebskraft bei im Wesentlichen ähnlicher Baugröße bereitstellt.

Die Aufgabe wird durch einen Linearantrieb nach dem Anspruch 1 und einer Verwendung eines entsprechenden Linearantriebs zur Betätigung eines Ventils nach dem nebengeordneten Anspruch gelöst.

Ein erster Aspekt der Erfindung betrifft einen Linearantrieb, insbesondere zur Umsetzung einer Rotationsbewegung in eine Linearbewegung zur Betätigung eines Ventils mit einem Absperrschieber, mit einem Kurbelmechanismus, der Linearantrieb umfassend eine erste Kurbelwelle, welche über ein erstes Pleuel mit einer Kolbenstange verbunden ist, eine zweite Kurbelwelle, welche über ein zweites Pleuel mit der Kolbenstange verbunden ist, und ein Planetengetriebe zum rotativen Antrieb der ersten Kurbelwelle und der zweiten Kurbelwelle.

Ein weiterer Aspekt der Erfindung betrifft eine Verwendung eines Linearantriebs in einer der hierin beschriebenen typischen Ausführungsformen zur Betätigung eines Ventils mit einem Absperrschieber nach dem nebengeordneten Anspruch.

Soweit hierin der Ausdruck "Getriebe" im Zusammenhang mit dem erfindungsgemäßen Linearantrieb verwendet wird, ist üblicherweise das Planetengetriebe des Linearantriebs gemeint.

Eine typische Verwendung von hierin beschriebenen Linearantrieben ist die Betätigung eines Ventils mit Absperrschieber in einer Wassertiefe von mindestens 30 m zur Steuerung des Flusses in einer Öl- oder Gasförderanlage.

Bei typischen Ausführungsformen ist das Planetengetriebe mit einem Motor verbunden, um durch den Motor angetrieben zu werden. Typischerweise steht ein Planetenträger des Planetengetriebes mit einer Antriebswelle eines Motors in Eingriff. Typische Eingriffs-Verbindungen können ein Kegelradgetriebe, ein Getriebe mit einem Ritzel, typischerweise Kegelritzel, mit Tellerrad sein. Bei weiteren Ausführungsformen ist der Planetenträger direkt mit einem Rotor eines Motors verbunden oder mit diesem einstückig ausgeführt.

Typischerweise sind der Elektromotor oder das Planetengetriebe in einem ölgefüllten Gehäuse angeordnet - gemeinsam oder auch Elektromotor und Getriebe getrennt in zwei Gehäusen. Typischerweise ist das Gehäuse oder sind die Gehäuse eingerichtet, mindestens einem Tiefendruck in 1000 m Wassertiefe standzuhalten. Typische Gehäuse sind wasserdichten oder ölgefüllt.

Bei typischen Ausführungsformen befinden sich die Kurbelwellen typischerweise auf der gleichen Achse. Im Betrieb drehen sich die Kurbelwellen typischerweise gegenläufig. Beide Kurbelwellen wirken über die Pleuel typischerweise auf dieselbe Kolbenstange. Zum Antrieb der beiden Kurbelwellen wird ein Planetengetriebe als Verteilgetriebe eingesetzt.

Typische Planetengetriebe von Ausführungsformen sind als leistungsverzweigtes Getriebe angeordnet. Es entsteht insbesondere eine Leistungsverzweigung auf die beiden Kurbelwellen. Das Getriebe besitzt somit einen Antrieb, welcher typischerweise mit einer Welle eines Motors in Eingriff ist, und zwei Abtriebe, die jeweils direkt mit einer der beiden Kurbelwellen verbunden sind. Das heißt, das Reaktionsmoment, welches bei einem Standard-Planetengetriebe mit feststehendem Hohlrad ins Gehäuse eingeleitet wird, wird bei dieser Erfindung als zweiter Abtrieb und somit zum Antrieb der zweiten Kurbelwelle verwendet. Die verzweigte Leistung wird über die Kurbelwellen und die Pleuel in der Kolbenstange wieder zusammengeführt.

Die Ausführung des Planetengetriebes kann grundsätzlich in verschiedenen Bauformen erfolgen. Typische Ausführungsformen verwenden die Bauform 7 nach VDI 2157. Die beiden Hohlräder des Planetengetriebes bilden jeweils einen Abtrieb und sind mit jeweils einer der Kurbelwellen verbunden. Der Antrieb des Planetenträgers kann mechanisch, beispielsweise über ein Kegelradgetriebe, erfolgen. Alternativ kann der Planetenträger auch in den Rotor eines Elektromotors Integriert werden.

Die erste Kurbelwelle ist mit einem Hohlrad des Planetengetriebes verbunden. Die zweite Kurbelwelle ist mit einem weiteren Hohlrad des Planetengetriebes verbunden.

Typischerweise umfasst das Planetengetriebe einen ersten Planetensatz und einen zweiten Planetensatz, welche auf einem gemeinsamen Planetenträger angeordnet sind. Bei typischen Ausführungsformen ist der Planetenträger mittig oder zwischen den Planetensätzen angeordnet. Typischerweise steht der erste Planetensatz mit dem ersten Hohlrad und der zweite Planetensatz mit dem zweiten Hohlrad in Eingriff.

Typischerweise sind die Planetenräder des ersten Planetensatzes jeweils drehfest mit einem jeweiligen Planetenrad des zweiten Planetensatzes verbunden. Insbesondere umfassen Ausführungsformen kein Sonnenrad oder sind Sonnenrad-los.

Gegenüber der Standardanwendung von Planetengetrieben, bei der das Reaktionsmoment über das Hohlrad ins Gehäuse eingeleitet wird und ungenutzt bleibt, können Ausführungsformen den Vorteil bieten, dass das nutzbare Gesamtdrehmoment aus der Summe von Abtriebsdrehmoment und Reaktionsmoment besteht. Zur Erreichung des erforderlichen Drehmomentes kann das Getriebe und damit der Linearantrieb insgesamt kompakter ausgeführt werden.

Typischerweise wird bei Ausführungsformen die Bauform des Planetengetriebes so angepasst, dass der Antrieb in Form eines Elektromotors integriert werden kann oder mittels eines Winkelgetriebes in axialer Richtung der Kolbenstange erfolgen kann. Der komplette Linearantrieb kann somit in einer einfachen Konstruktionsweise sehr kompakt gestaltet werden. Bei beengten Platzverhältnissen können Ausführungsformen mit integriertem Motor Vorteile bieten.

Bei weiteren Ausführungsformen sind die Planetenräder des ersten Planetensatzes und die Planetenräder des zweiten Planetensatzes auf ihren jeweiligen Drehachsen verdrehbar zueinander angeordnet. Die Planetenräder greifen in Sonnenräder ein, welche drehfest auf einer gemeinsamen, zentralen Sonnenwelle angeordnet sind. Die Sonnenräder weisen somit im Betrieb die gleiche Umlaufgeschwindigkeit und Drehmoment auf. Die erste Kurbelwelle ist wiederum drehfest mit dem ersten Hohlrad und die zweite Kurbelwelle drehfest mit dem zweiten Hohlrad verbunden oder integral ausgeführt. Bei solchen Ausführungsformen können die erreichbaren Übersetzungen geringer sein, die Ausführungsform kann jedoch den Vorteil aufweisen, dass sie einfach zu montieren ist.

Auch sind Varianten von leistungsverzweigten Planetengetrieben möglich, bei welchen die erste Kurbelwelle mit einem ersten Hohlrad drehfest verbunden ist und die zweite Kurbelwelle mit einem Planetenträger drehfest verbunden ist. Bei typischen Ausführungsformen weist das Planetengetriebe ein Sonnenrad auf, welches mit einer Antriebswelle in Eingriff steht

Bei typischen Ausführungsformen ist die Drehachse des Planetengetriebes koaxial zu den jeweiligen Drehachsen der Kurbelwellen angeordnet. Die Kurbelwellen sind insbesondere frei drehbar - abgesehen von der Verbindung mit dem Pleuel und dem Eingriff des Hohlrads in die Planetenräder.

Bei typischen Linearantrieben weist die erste Kurbelwelle eine erste Übersetzung auf und die zweite Kurbelwelle weist eine gegenüber der ersten Übersetzung unterschiedliche zweite Übersetzung auf. Mit dem Begriff der "Übersetzung der Kurbelwelle" ist jeweils insbesondere die Übersetzung von den Planetenrädern zum jeweiligen Hohlrad oder der jeweiligen Kurbelwelle gemeint. Typischerweise rotieren die Kurbelwellen im Betrieb in entgegengesetzte Richtungen, insbesondere bei einem Antrieb über den Planetenträger auf Grund unterschiedlicher Übersetzungen.

Typische Ausführungsformen umfassen eine erste Kulisse, welche den Drehbereich der ersten Kurbelwelle, und eine zweite Kulisse, welche den Drehbereich der zweiten Kurbelwelle jeweils auf höchstens 180°, typischerweise auf unter 180° oder typischerweise auf maximal 175° oder maximal 170° begrenzen. Der Begriff Kulisse kann sich lediglich auf entsprechende Anschläge beziehen oder bevorzugt komplette Führungen einschließlich von Anschlägen bezeichnen.

Typische Ausführungsformen bieten den Vorteil, dass sie kompakt gestaltet werden können. Das Planetengetriebe kann hoch übersetzen, so dass unter guter Ausnutzung des Platzes ein hohes Reaktionsmoment erreicht wird.

### Kurze Beschreibung der Zeichnungen

Weitere Vorteile und Merkmale bevorzugter Ausführungsformen der Erfindung werden nachfolgend anhand der beiliegenden schematischen Zeichnungen erläutert. Die Figuren zeigen:
- Fig. 1: eine typische Ausführungsform eines Linearantriebs in einer schematischen Schnittansicht,
- Fig. 2: die Ausführungsform der Fig. 1 in einer schematischen Seitenansicht, und
- Fig. 3: eine Kulisse der Ausführungsform der Figs. 1 und 2 in einer schematischen, perspektivischen Ansicht.

### Beschreibung bevorzugter Ausführungsbeispiele

Nachfolgend werden typische Ausführungsformen anhand der Figuren beschrieben, wobei die Erfindung nicht auf die Ausführungsbeispiele beschränkt ist, vielmehr wird der Umfang der Erfindung durch die Ansprüche bestimmt.

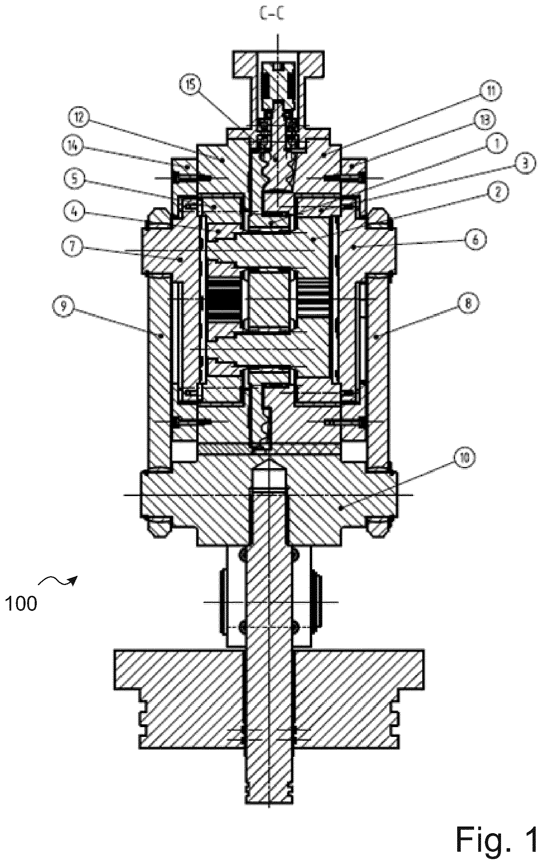

In der Fig. 1 ist eine typische Ausführungsform eines Linearantriebs 100 in einer schematischen Schnittansicht gezeigt.

Der Linearantrieb 100 dient zum linearen Antrieb einer mit einer Aufnahme verbundenen Kolbenstange 10. In der Darstellung der Fig. 1 wird die Kolbenstange 10 in der Zeichenebene nach oben und unten bewegt. Die Kolbenstange 10 ist bei typischen Ausführungsformen mit einem Absperrschieber eines Ventils, insbesondere eines Unterseeventils verbunden.

Angetrieben wird der Linearantrieb 100 durch einen Motor (nicht dargestellt), dessen Welle drehfest mit einem Kegelritzel 15 verbunden ist. Das Kegelritzel 15 steht mit einem Tellerrad, welches einstückig mit einem Planetenträger 1 ausgebildet ist, in Eingriff und treibt diesen Planetenträger 1 mit dem Tellerrad an.

In dem Planetenträger 1 ist ein erster Planetensatz mit ersten Planetenrädern 2 und ein zweiter Planetensatz mit zweiten Planetenrädern 4 angeordnet. Die ersten Planetenräder 2 (in Fig. 1 nur eines dargestellt) des ersten Planetensatzes sind jeweils drehfest mit einem jeweiligen Planetenrad 4 (in Fig. 1 nur eines dargestellt) des zweiten Planetensatzes drehfest verbunden. Allerdings sind die Planetenräder 2 und 4 der beiden Planetensätze, welche jeweils drehfest verbunden sind, wiederum über eine einstückig mit einem der Planetenräder 2 und 4 ausgebildeten Planetenwelle drehbar in dem Planetenträger 1 gelagert.

Die ersten Planetenräder 2 des ersten Planetensatzes greifen in ein erstes Hohlrad 3 ein. Die zweiten Planetenräder 4 des zweiten Planetensatzes greifen in ein zweites oder hierin auch als weiteres Hohlrad bezeichnetes Hohlrad 5 ein.

Das erste Hohlrad 3 und das zweite oder weitere Hohlrad 5 sind drehbar in einer gemeinsamen Achse mit dem Planetenträger 1 in einem Gehäuse mit den Gehäuseteilen 11 und 12 gelagert.

Die Zähnezahlverhältnisse und damit die erste Übersetzung von den ersten Planetenrädern 2 des ersten Planentensatzes zu dem ersten Hohlrad 3 unterscheiden sich gegenüber den Zähnezahlverhältnissen und der zweiten Übersetzung von den zweiten Planetenrädern 4 zu dem zweiten Hohlrad 5. Bei einer Rotation des Planetenträgers 1 im Betrieb ergibt sich entsprechend der unterschiedlichen Übersetzungen eine Relativbewegung des ersten Hohlrads 3 gegenüber dem zweiten Hohlrad 5. Bei dem in der Fig. 1 dargestellten Ausführungsbeispiel weist das erste Hohlrad 3 108 Zähne auf und das zweite Hohlrad 5 weist 109 Zähne auf. Die ersten Planetenräder 2 weisen 41 Zähne auf und die zweiten Planetenräder 4 weisen 42 Zähne auf. Bei weiteren Ausführungsbeispielen können andere Kombinationen verwendet werden, um die unterschiedlichen Übersetzungen zu erreichen.

Die Kurbelwellen sind bei typischen Ausführungsformen eher scheibenförmig ausgeführt, also mit axialen Dicke, welche kleiner ist als ihr jeweiliger Durchmesser. Dies ermöglicht eine kompakte Bauform.

Eine erste Kurbelwelle 6 ist mit dem ersten Hohlrad 3 drehfest verbunden. Eine zweite Kurbelwelle 7 ist mit dem zweiten Hohlrad 5 drehfest verbunden. Die beiden Kurbelwellen 6 und 7 sind über jeweils eine Koppelstange bzw. ein Pleuel 8 und 9 gelenkig mit der Kolbenstange 10 verbunden. Diese Verbindung sorgt dafür, dass sich die beiden Kurbelwellen 6 und 7 synchron, also mit gleicher Drehzahl, aber gegebenenfalls in unterschiedlicher Richtung, drehen.

Der Schwenkwinkel der Kurbelwelle 6 ist durch eine Kulisse 13 auf 180° zwischen einem oberen und einem unteren Totpunkt begrenzt. Der Schwenkwinkel der Kurbelwelle 7 ist durch eine Kulisse 14 auf 180° zwischen einem oberen und einem unteren Totpunkt begrenzt. Die Anschläge der Kulissen 13 und 14 sind angeordnet, so dass sich die beiden Kurbelwellen 6 und 7 bei der Drehung vom jeweiligen oberen Totpunkt zu dem jeweiligen unteren Totpunkt in gegensätzliche Richtungen drehen müssen.

Der Antrieb des Planetenträgers führt bei typischen Ausführungsformen zu einer Drehung der Hohlräder, die in gegensätzlicher Richtung synchron erfolgt. Diese Drehbewegung wird über die Kurbelwellen und die Koppelstangen zu einer Linearbewegung der Kolbenstange umgewandelt.

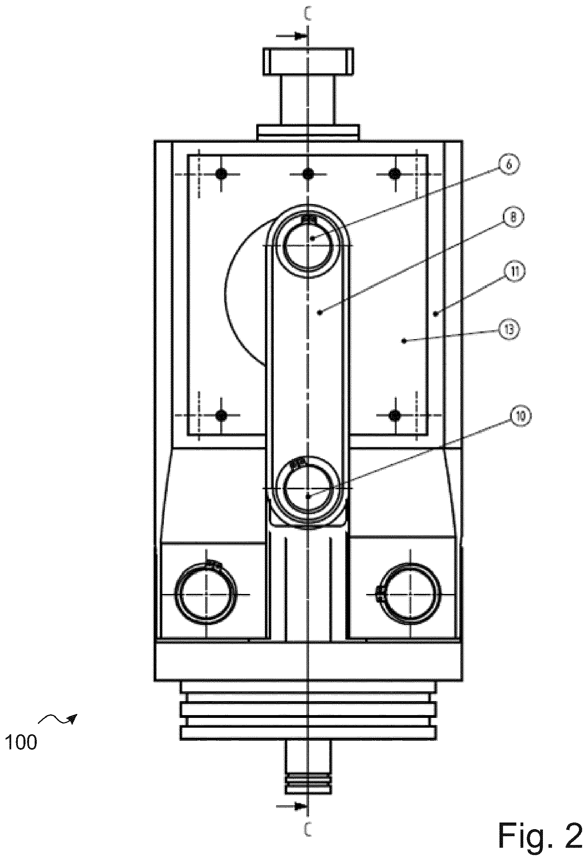

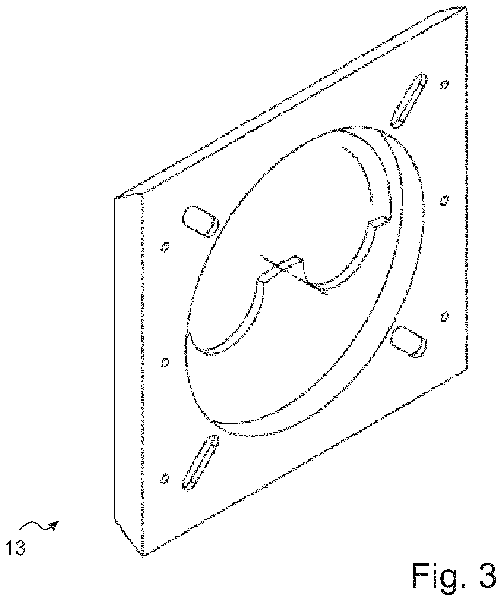

In der Fig. 2 ist eine Seitenansicht der Ausführungsform der Fig. 1. Die in der Fig. 1 und auch die in der Fig. 3 verwendeten Bezugszeichen entsprechen denen der Fig. 1, wobei nicht alle Teile nochmals mit einem Bezugszeichen versehen sein müssen und im Text nicht alle Elemente, welche mit einem Bezugszeichen versehen sind, nochmals beschrieben werden.

In der Fig. 2 ist die Drehwinkelbegrenzung, welche durch die Kulisse 13 bewirkt wird, zu erkennen. Auf der gegenüberliegenden Seite (also in der Fig. 2 auf der Rückseite des Linearantriebs 100) ist eine entgegengesetzt montierte Kulisse (Bezugszeichen 14 in der Fig. 1) angeordnet, welche eine Drehbewegung in Gegenrichtung zulässt.

Die Fig. 3 zeigt die Kulisse 13 in einer schematischen, perspektivischen Ansicht. Die Kulissen 13 und 14 sind baugleich aufgebaut, werden jedoch gegenüberliegend in gegensätzlicher Achsorientierung montiert, um die gegenläufige Bewegung der Kurbelwellen zu erreichen.

Die Bauform des Planetengetriebes ermöglicht eine sehr hohe Übersetzung. Die Abtriebsmomente in den beiden Hohlrädern sind somit annähernd gleich. Aus dem Planetengetriebe wird abtriebsseitig kein Reaktionsmoment in das Gehäuse eingeleitet.

## Patentansprüche

1. Linearantrieb (100) mit einem Kurbelmechanismus, der Linearantrieb (100) umfassend:
- eine erste Kurbelwelle (6), welche über ein erstes Pleuel (8) mit einer Kolbenstange (10) verbunden ist,
- eine zweite Kurbelwelle (7), welche über ein zweites Pleuel (9) mit der Kolbenstange (10) verbunden ist, und
- ein Planetengetriebe zum rotativen Antrieb der ersten Kurbelwelle (6) und der zweiten Kurbelwelle (7),
**dadurch gekennzeichnet, dass**
die erste Kurbelwelle (6) mit einem Hohlrad (3) des Planetengetriebes und die zweite Kurbelwelle (7) mit einem weiteren Hohlrad (5) des Planetengetriebes verbunden ist.

2. Linearantrieb (100) nach Anspruch 1, wobei das Planetengetriebe als Leistungs-verzweigtes Getriebe ausgeführt ist.

3. Linearantrieb (100) nach einem der vorhergehenden Ansprüche, wobei das Planetengetriebe einen ersten Planetensatz und einen zweiten Planetensatz umfasst, welche auf einem gemeinsamen Planetenträger (1) angeordnet sind.

4. Linearantrieb (100) nach Anspruch 3, wobei die Planetenräder (2) des ersten Planetensatzes jeweils drehfest mit einem jeweiligen Planetenrad (4) des zweiten Planetensatzes verbunden sind.

5. Linearantrieb (100) nach Anspruch 3 oder 4, wobei der Planetenträger (1) mit einer Antriebswelle in Eingriff steht.

6. Linearantrieb (100) nach einem der Ansprüche 3 bis 5, wobei die Antriebswelle mittels eines Kegelritzels (15) mit dem Planetenträger in Eingriff steht.

7. Linearantrieb (100) nach einem der Ansprüche 3 bis 6, wobei der Planetenträger als Tellerrad ausgebildet ist oder ein Tellerrad integral ausgebildet umfasst.

8. Linearantrieb (100) nach einem der vorhergehenden Ansprüche, wobei die Drehachse des Planetengetriebes koaxial zu den jeweiligen Drehachsen der Kurbelwellen (6, 7) ist.

9. Linearantrieb (100) nach einem der vorhergehenden Ansprüche, wobei die erste Kurbelwelle (6) eine erste Übersetzung aufweist und die zweite Kurbelwelle (7) eine gegenüber der ersten Übersetzung unterschiedliche zweite Übersetzung aufweist.

10. Linearantrieb (100) nach einem der vorhergehenden Ansprüche, wobei die Kurbelwellen (6, 7) im Betrieb in entgegengesetzte Richtung rotieren.

11. Linearantrieb (100) nach einem der vorhergehenden Ansprüche, umfassend eine erste Kulisse und eine zweite Kulisse, welche jeweils den Drehbereich der ersten Kurbelwelle (6) und den Drehbereich der zweiten Kurbelwelle (7) jeweils auf höchstens 180° begrenzen.

12. Verwendung eines Linearantriebs (100) nach einem der vorhergehenden Ansprüche zur Betätigung eines Ventils mit einem Absperrschieber.

13. Verwendung nach Anspruch 12 zum Steuern des Flusses in einer Öl- oder Gasförderanlage in einer Wassertiefe von mindestens 30 m.

## Claims

1. Linear drive (100) having a crank mechanism, the linear drive (100) comprising:
- a first crankshaft (6) which is connected to a piston rod (10) via a first connecting rod (8),
- a second crankshaft (7) which is connected to the piston rod (10) via a second connecting rod (9), and
- a planetary gear train for rotationally driving the first crankshaft (6) and the second crankshaft (7),
**characterised in that**
the first crankshaft (6) is connected to a ring gear (3) of the planetary gear train and the second crankshaft (7) is connected to a further ring gear (5) of the planetary gear train.

2. Linear drive (100) according to claim 1, wherein the planetary gear train is designed as a power-split gearbox.

3. Linear drive (100) according to either of the preceding claims, wherein the planetary gear train comprises a first planetary gear set and a second planetary gear set which are arranged on a common planetary carrier (1).

4. Linear drive (100) according to claim 3, wherein the planetary gears (2) of the first planetary gear set are each connected for conjoint rotation with each planetary gear (4) of the second planetary gear set.

5. Linear drive (100) according to either claim 3 or claim 4, wherein the planetary carrier (1) is in engagement with a drive shaft.

6. Linear drive (100) according to any of claims 3 to 5, wherein the drive shaft is in engagement with the planetary carrier by means of a bevel pinion (15).

7. Linear drive (100) according to any of claims 3 to 6, wherein the planetary carrier is designed as a crown wheel or comprises a crown wheel formed integrally.

8. Linear drive (100) according to any of the preceding claims, wherein the axis of rotation of the planetary gear train is coaxial with each of the axes of rotation of the crankshafts (6, 7).

9. Linear drive (100) according to any of the preceding claims, wherein the first crankshaft (6) has a first transmission ratio and the second crankshaft (7) has a second transmission ratio different from the first transmission ratio.

10. Linear drive (100) according to any of the preceding claims, wherein the crankshafts (6, 7) rotate in the opposite direction during operation.

11. Linear drive (100) according to any of the preceding claims, comprising a first slot and a second slot which limit the rotational range of the first crankshaft (6) and the rotational range of the second crankshaft (7) in each case to at most 180°.

12. Use of a linear drive (100) according to any of the preceding claims for actuating a valve having a gate valve.

13. Use according to claim 12 for controlling flow in an oil or gas conveying system in a water depth of at least 30 m.

## Revendications

1. Entraînement linéaire (100) comportant un mécanisme à manivelle, l'entraînement linéaire (100) comprenant :
- un premier vilebrequin (6), lequel est relié par l'intermédiaire d'une première bielle (8) à une tige de piston (10),
- un second vilebrequin (7), lequel est relié par l'intermédiaire d'une seconde bielle (9) à la tige de piston (10), et
- un engrenage planétaire pour l'entraînement rotatif du premier vilebrequin (6) et du second vilebrequin (7),
**caractérisé en ce que**
le premier vilebrequin (6) est relié à une couronne (3) de l'engrenage planétaire et le second vilebrequin (7) est relié à une autre couronne (5) de l'engrenage planétaire.

2. Entraînement linéaire (100) selon la revendication 1, l'engrenage planétaire étant formé comme une transmission de puissance ramifiée.

3. Entraînement linéaire (100) selon l'une des revendications précédentes, l'engrenage planétaire comprenant un premier train planétaire et un second train planétaire, lesquels sont agencés sur un support planétaire (1) commun.

4. Entraînement linéaire (100) selon la revendication 3, les roues planétaires (2) du premier train planétaire étant respectivement solidaires en rotation avec une roue planétaire (4) respective du second train planétaire.

5. Entraînement linéaire (100) selon la revendication 3 ou 4, le support planétaire (1) étant en prise avec un arbre d'entraînement.

6. Entraînement linéaire (100) selon l'une des revendications 3 à 5, l'arbre d'entraînement étant en prise avec le support planétaire au moyen d'un pignon conique (15).

7. Entraînement linéaire (100) selon l'une des revendications 3 à 6, le support planétaire étant formé comme une couronne dentée ou comprenant une couronne dentée formée intégrée.

8. Entraînement linéaire (100) selon l'une des revendications précédentes, l'axe de rotation de l'engrenage planétaire étant coaxial aux axes de rotation respectifs des vilebrequins (6, 7).

9. Entraînement linéaire (100) selon l'une des revendications précédentes, le premier vilebrequin (6) présentant un premier rapport de transmission et le second vilebrequin (7) présentant un second rapport de transmission différent par rapport au premier rapport de transmission.

10. Entraînement linéaire (100) selon l'une des revendications précédentes, les vilebrequins (6, 7) tournant dans des directions opposées pendant le fonctionnement.

11. Entraînement linéaire (100) selon l'une des revendications précédentes, comprenant une première coulisse et une seconde coulisse, lesquelles délimitent respectivement la zone de rotation du premier vilebrequin (6) et la zone de rotation du second vilebrequin (7) à respectivement au plus 180°.

12. Utilisation d'un entraînement linéaire (100) selon l'une des revendications précédentes pour l'actionnement d'une soupape comprenant une vanne d'arrêt.

13. Utilisation selon la revendication 12 pour le contrôle du flux dans une installation pétrolière ou gazière à une profondeur d'eau d'au moins 30 m.
